# EUROPÄISCHE PATENTANMELDUNG

(11) **EP 4 752 663 A1**
(43) Veröffentlichungstag der Anmeldung: **03.06.2026**
(21) Anmeldenummer: 24216408.5
(22) Anmeldetag: 29.11.2024
(51) Int. Cl.: G05D 1/243, G05D 1/246, G05D 105/28, G05D 107/70, G05D 109/10, G05D 111/10

(54) **AUTONOM FAHRENDES FAHRZEUG, VERBUND AUS DEM AUTONOM FAHRENDEN FAHRZEUG UND EINER VIELZAHL VON LICHTQUELLEN UND VERFAHREN ZUM BETRIEB DES AUTONOM FAHRENDEN FAHRZEUGS**

(71) Anmelder: SICK AG, 79183 Waldkirch (DE)
(72) Erfinder: Müller, Romain, 79252 Stegen (DE)
(74) Vertreter: Manitz Finsterwald Patent- und Rechtsanwaltspartnerschaft mbB

(57) **Zusammenfassung**

Ein autonom fahrendes Fahrzeug (1) dient zum Transport von Gütern und/oder Personen. Das autonom fahrende Fahrzeug (1) weist eine Positionsbestimmungsvorrichtung (2) zur Bestimmung der Position des autonom fahrenden Fahrzeugs (1) auf, wobei die Positionsbestimmungsvorrichtung (2) eine Verarbeitungsvorrichtung (3), eine Speichereinrichtung (4) und zumindest eine neuromorphe Kamera (5) umfasst. Die zumindest eine neuromorphe Kamera (5) ist dazu ausgebildet, um eine Vielzahl von Lichtquellen (50) in ihrem Sichtfeld (6) in der Umgebung des autonom fahrenden Fahrzeugs (1) zu detektieren, wobei die Verarbeitungsvorrichtung (3) dazu ausgebildet ist, um die Vielzahl der detektierten Lichtquellen (50) mit in der Speichereinrichtung (4) gespeicherten Referenzlichtquellen abzugleichen, um dadurch die Position des autonom fahrenden Fahrzeugs (1) zu ermitteln.

## Beschreibung

Die Erfindung betrifft ein autonom fahrendes Fahrzeug (AGV), einen Verbund aus dem autonom fahrenden Fahrzeug und einer Vielzahl von Lichtquellen und ein Verfahren zum Betrieb des autonom fahrenden Fahrzeugs.

Ein autonom fahrendes Fahrzeug ist ein Fahrzeug, welches sich ohne menschliche Eingriffe durch die Umgebung navigieren kann. Diese Fahrzeuge kombinieren üblicherweise eine Vielzahl von Sensoren wie Kameras, Radar, Lidar und Ultraschall, um ihre Umgebung zu erkennen und sicher durch sie zu navigieren. Bei einem solchen autonom fahrenden Fahrzeug kann es sich beispielsweise um Fahrzeuge handeln, die Paletten, Gitterboxen oder Personen transportieren. Es kann sich auch um andere mobile Roboter handeln. Sie können in Lagerhallen und/oder Fertigungsstraßen eingesetzt werden. Damit das autonom fahrende Fahrzeug sicher durch eine Fabrik und/oder Lagerhalle navigieren kann, muss es genau wissen, wo es sich befindet. Mittels SLAM ("Simultaneous Localization And Mapping") ist es in der Robotik und bei autonomen Fahrzeugen möglich, gleichzeitig eine Karte der Umgebung zu erstellen und die eigene Position innerhalb dieser Karte zu bestimmen. Mittels Lidar-Systemen und/oder 3D-Kameras können 3D-Karten aufgenommen werden und mit Referenzen zur Positionsbestimmung verglichen werden. Mittels UWB ("Ultrawideband") oder WiFi kann die Zeit gemessen werden, die ein Sender benötigt, um mit verschiedenen Empfängern zu kommunizieren. Durch die verschiedenen Latenzen kann die Position bestimmt werden. Auch über das Auslesen von RFID-Tags kann die aktuelle Position ermittelt werden.

Nachteilig an den bekannten Lösungen ist, dass einige von ihnen komplexe Algorithmen erfordern. Dies betrifft besonders die optischen Lösungen mit 2D/3D-Kameras oder Lidarsystemen. Der Energieverbrauch ist heutzutage ein wichtiger Aspekt, da die AGVs ihren Strom typischerweise aus Batterien beziehen. Um die Einsatzzeit gegenüber der Aufladezeit möglichst zu maximieren, ist es von Vorteil wenn die Sensoren, die zur Positionsbestimmung benutzt werden, möglichst wenig Strom verbrauchen.

Es ist daher die Aufgabe der hier vorliegenden Erfindung eine möglichst Energiesparende Positionsbestimmung für autonom fahrende Fahrzeuge bereit zu stellen.

Die Aufgabe wird durch das autonom fahrende Fahrzeug gemäß dem Anspruch 1, sowie durch einen Verbund aus dem autonom fahrenden Fahrzeug und einer Vielzahl von Lichtquellen gemäß dem Anspruch 13 und durch das Verfahren zum Betrieb eines solchen autonom fahrenden Fahrzeugs gemäß dem Anspruch 15 gelöst. Die Ansprüche 2 bis 12 beschreiben vorteilhafte Weiterbildungen des autonom fahrenden Fahrzeugs, wohingegen der Anspruch 13 eine vorteilhafte Weiterbildung des Verbunds beschreibt.

Das erfindungsgemäße autonom fahrende Fahrzeug weist eine Positionsbestimmungsvorrichtung zur Bestimmung der Position des autonom fahrenden Fahrzeugs auf. Die Positionsbestimmungsvorrichtung umfasst eine Verarbeitungsvorrichtung, eine Speichereinrichtung und zumindest eine neuromorphe Kamera. Die zumindest eine neuromorphe Kamera ist dazu ausgebildet, um eine Vielzahl von Lichtquellen in ihrem Sichtfeld in der Umgebung des autonom fahrenden Fahrzeugs zu detektieren, wobei die Verarbeitungsvorrichtung dazu ausgebildet ist, um die Vielzahl der detektierten Lichtquellen mit in der Speichereinrichtung gespeicherten Referenzlichtquellen abzugleichen, um dadurch die Position des autonom fahrenden Fahrzeugs, z.B. im Gebäude, zu ermitteln.

Es ist besonders vorteilhaft, dass die Positionsbestimmungsvorrichtung eine neuromorphe Kamera umfasst. Eine neuromorphe Kamera bringt für diesen Anwendungsfall viele Vorteile mit sich. Im Gegensatz zu herkömmlichen Kameras, die Bilder in festen Intervallen aufnehmen, erfasst eine neuromorphe Kamera bevorzugt nur die Änderungen in der Szene. Jedes Pixel in der Kamera arbeitet bevorzugt unabhängig und meldet Änderungen insbesondere in Echtzeit. Dies führt zu einer effizienteren Datenverarbeitung durch die Verarbeitungsvorrichtung, da nur relevante Informationen verarbeitet werden. Dadurch muss die Verarbeitungsvorrichtung nicht ganz so leistungsstark sein verglichen mit dem Fall, dass eine herkömmliche Kamera eingesetzt wird. Da nur Veränderungen erfasst und verarbeitet werden, verbrauchen neuromorphe Kameras deutlich weniger Energie als traditionelle Kameras. Dies ist besonders vorteilhaft für batteriebetriebene Geräte wie autonom fahrende Fahrzeuge. Neuromorphe Kameras können sehr schnelle Bewegungen erfassen, weil sie eine viel höhere zeitliche Auflösung haben als herkömmliche Kameras. Dies macht sie ideal für Anwendungen, die schnelle Reaktionen erfordern, wie z.B. autonom fahrende Fahrzeuge oder fortgeschrittene Robotiksysteme. Da nur Änderungen erfasst werden, produzieren diese Kameras weniger Daten, was die Anforderungen an Speicher und Bandbreite reduziert und die Geschwindigkeit der Datenverarbeitung erhöht. Neuromorphe Kameras sind weniger anfällig für Probleme bei wechselnden Lichtverhältnissen, da sie sich auf Änderungen in der Szene konzentrieren und nicht auf das absolute Lichtniveau.

In Bezug auf das erfindungsgemäße autonom fahrende Fahrzeug ergeben sich durch den Einsatz neuromorpher Kameras Vorteile in der Genauigkeit bei der Positionsbestimmung. Durch den Einsatz neuromorpher Kameras, die Änderungen im Sichtfeld erkennen können, kann das autonom fahrende Fahrzeug seine Position präziser bestimmen. Dies ist besonders in dynamischen Umgebungen nützlich, wo sich Lichtquellen und andere visuelle Marker häufig ändern. Da die zumindest eine neuromorphe Kamera nur Veränderungen in ihrer Umgebung erfasst, anstatt kontinuierlich Video zu streamen, kann die Verarbeitungsvorrichtung seine Rechenressourcen effizienter nutzen. Dies führt zu schnelleren Reaktionszeiten und kann die Notwendigkeit für umfangreiche Rechenhardware verringern. Der reduzierte Datenstrom, der von der zumindest einen neuromorphen Kamera erzeugt wird, bedeutet auch einen geringeren Energieverbrauch, was für die Langzeitbetriebsfähigkeit des autonomen fahrenden Fahrzeugs vorteilhaft ist. Die zumindest eine neuromorphe Kamera ist besonders robust gegenüber Änderungen in den Lichtverhältnissen, was die Zuverlässigkeit der Positionsbestimmung unter unterschiedlichen Umgebungsbedingungen verbessert.

Insgesamt ist es besonders vorteilhaft, dass mittels der neuromorphen Kamera Lichtquellen in der Umgebung des autonom fahrenden Fahrzeugs detektiert werden, um diese Lichtquellen mit in der Speichereinrichtung gespeicherten Referenzlichtquellen abzugleichen, um dadurch die Position des autonom fahrenden Fahrzeugs zu ermitteln.

In einer Weiterbildung weist die Speichereinrichtung eine Referenzkarte auf, in welcher die Referenzlichtquellen enthalten sind, wobei die Verarbeitungsvorrichtung dazu ausgebildet ist, um anhand des Abgleichs der detektierten Lichtquellen mit den Referenzlichtquellen die Position des autonom fahrenden Fahrzeugs auf der Referenzkarte zu ermitteln. Dadurch kann das autonom fahrende Fahrzeug sicher feststellen, ob es sich noch auf der geplanten Route befindet.

In einer Weiterbildung weist das autonom fahrende Fahrzeug eine Kommunikationseinrichtung auf. Das autonom fahrende Fahrzeug ist dazu ausgebildet, um die ermittelte Position über die Kommunikationseinrichtung an eine übergeordnete Leiteinrichtung zu übertragen. Dadurch ist für den Betreiber des autonom fahrenden Fahrzeugs ersichtlich, wo sich dieses befindet. Die übergeordnete Leiteinrichtung ist bevorzugt dazu ausgebildet, um die Position sämtlicher autonom fahrender Fahrzeuge empfangen und in einer gemeinsamen Karte darstellen.

In einer Weiterbildung ist die Verarbeitungsvorrichtung dazu ausgebildet, um festzustellen, welche detektierte Lichtquelle welcher gespeicherten Referenzlichtquelle entspricht, um anhand dieses Abgleichs die Position des autonom fahrenden Fahrzeugs zu ermitteln. Dabei können beispielsweise Abstände der detektierten Lichtquellen zueinander ermittelt und mit Abständen der gespeicherten Referenzlichtquellen verglichen werden.

In einer Weiterbildung ist die Verarbeitungsvorrichtung dazu ausgebildet, um die Position des autonom fahrenden Fahrzeugs dadurch zu bestimmen, dass die Lage der detektierten Lichtquellen zum Bildmittelpunkt der neuromorphen Kamera ermittelt wird.

In einer Weiterbildung ist die Verarbeitungsvorrichtung dazu ausgebildet, um die Position des autonom fahrenden Fahrzeugs dadurch zu bestimmen, dass eine Orientierung des Koordinatensystems der detektierten Lichtquellen im Vergleich zum Koordinatensystem der neuromorphen Kamera ermittelt wird. So kann das Koordinatensystem der detektierten Lichtquellen so lange verschoben und/oder gedreht werden, bis die detektierten Lichtquellen deckungsgleich zu den gespeicherten Referenzlichtquellen angeordnet sind, um festzustellen, welche der detektierten Lichtquellen zu welcher der gespeicherten Referenzlichtquellen korrespondiert, um dadurch die Position des autonom fahrenden Fahrzeugs zu ermitteln.

In einer Weiterbildung ist die zumindest eine neuromorphe Kamera beweglich, also verdrehbar und/oder verschwenkbar an dem autonom fahrenden Fahrzeug angeordnet.

In einer Weiterbildung ist die zumindest eine neuromorphe Kamera dazu ausgebildet um bezüglich des Elevationswinkels und/oder des Azimutwinkels verdreht werden. Dadurch können die Lichtquellen, die zur Positionsbestimmung verwendet werden, leichter gefunden werden.

In einer Weiterbildung ist die Positionsbestimmungsvorrichtung dazu ausgebildet, um die zumindest eine neuromorphe Kamera in ihrem Elevationswinkel und/oder in ihrem Azimutwinkel so lange zu verdrehen, bis die neuromorphe Kamera eine ausreichende Anzahl von Lichtquellen detektiert, die für die Positionsbestimmung erforderlich sind.

In einer Weiterbildung ist die Positionsbestimmungsvorrichtung dazu ausgebildet, um die aktuelle Ausrichtung der neuromorphen Kamera, die sich beispielsweise aus ihrem Elevationswinkel und/oder ihrem Azimutwinkel ergibt, für die Berechnung der Position des autonom fahrenden Fahrzeugs mit zu berücksichtigen.

In einer Weiterbildung ist das autonom fahrende Fahrzeug dazu ausgebildet, um die Fahrt anzuhalten, wenn die neuromorphe Kamera keine oder keine ausreichende Anzahl von Lichtquellen detektiert, um über diese die Position ermitteln zu können.

In einer Weiterbildung umfasst das autonom fahrende Fahrzeug zwei oder mehr als zwei neuromorphe Kameras, wobei die Sichtfelder der zwei oder der mehr als zwei neuromorphen Kameras lediglich teilweise überlappend oder vollständig überlappungsfrei zueinander angeordnet sind.

In einer Weiterbildung ist die Positionsbestimmungsvorrichtung dazu ausgebildet, um die Daten der zumindest zwei neuromorphen Kameras zur Positionsbestimmung zu verwenden.

In einer Weiterbildung ist die Positionsbestimmungsvorrichtung dazu ausgebildet, um die Ausrichtung und/oder Winkellage der zumindest zwei neuromorphen Kameras zueinander, nebst den von jeder neuromorphen Kamera detektierten Lichtquellen zur Positionsbestimmung zu verwenden.

In einer Weiterbildung ist die Positionsbestimmungsvorrichtung dazu ausgebildet, um Eigenschaften der detektierten Lichtquellen zu ermitteln und um diese Eigenschaften mit in der Speichereinrichtung gespeicherten Eigenschaften der gespeicherten Referenzlichtquellen abzugleichen, um dadurch zu ermitteln, zu welcher gespeicherten Referenzlichtquelle die detektierte Lichtquelle korrespondiert. Mit anderen Worten kann dadurch ermittelt werden, um welche gespeicherte Referenzlichtquelle es sich bei der detektierten Lichtquelle handelt. Es ist besonders vorteilhaft, dass noch zusätzliche Eigenschaften der detektierten Lichtquelle ermittelt werden, die über Präsenz der detektierten Lichtquelle hinausgehen.

In einer Weiterbildung handelt es sich bei der gespeicherten Eigenschaft der Referenzlichtquelle um eine Eigenschaft, die die Positionsbestimmungsvorrichtung bei der detektierten Lichtquelle ermitteln kann. Somit handelt es sich bei der gespeicherten Eigenschaft beispielsweise um keine Seriennummer.

In einer Weiterbildung umfasst jede gespeicherte Referenzlichtquelle zumindest eine gespeicherte Eigenschaft. Dabei unterscheiden sich die zumindest eine gespeicherte Eigenschaft der meisten oder aller gespeicherten Referenzlichtquellen voneinander in ihrer Art und/oder ihrem Wert. Mit anderen Worten können die gespeicherten Referenzlichtquellen anhand ihrer Eigenschaft voneinander unterschieden werden.

In einer Weiterbildung unterscheiden sich die zumindest eine gespeicherte Eigenschaft der meisten oder aller derjenigen gespeicherten Referenzlichtquellen voneinander, die in dem Sichtfeld der neuromorphen Kamera angeordnet sein können. Beträgt das Sichtfeld beispielsweise 300 m², so sollten die meisten oder alle in diesem Sichtfeld angeordneten Lichtquellen, die detektierbar sind, unterschiedliche Eigenschaften aufweisen, was im Umkehrschluss dann auch für die gespeicherten Referenzlichtquellen gilt. Dies bedeutet, dass in einem benachbarten Gebäude Lichtquellen installiert sein können, die wieder dieselben Eigenschaften aufweisen.

In einer Weiterbildung handelt es sich bei der zumindest einen gespeicherten Eigenschaft von zumindest einer gespeicherten Referenzlichtquelle um:
a) eine Frequenz und/oder ein Pulsmuster, die der gespeicherten Referenzlichtquelle zugewiesen ist, also mit welcher die gespeicherte Referenzlichtquelle moduliert wird; und/oder
b) eine Wellenlänge, die der gespeicherten Referenzlichtquelle zugewiesen ist, also mit welcher die gespeicherte Referenzlichtquelle Licht aussendet; und/oder
c) einer Helligkeit, die der gespeicherten Referenzlichtquelle zugewiesen ist, also mit welcher die gespeicherte Referenzlichtquelle leuchtet.

Es ist hier besonders vorteilhaft, dass diese Eigenschaften durch die Positionsbestimmungsvorrichtung berührungslos, also drahtlos und damit optisch detektierbar sind. Beim Bau des Gebäudes, durch welches sich das autonom fahrende Fahrzeug navigieren muss, werden Lichtquellen installiert, die bestimmte Eigenschaften haben, die die Positionsbestimmungsvorrichtung optisch erkennen kann. Für jede dieser physikalisch vorhandenen Lichtquellen in dem Gebäude, die für die Positionsbestimmung durch das autonom fahrende Fahrzeug installiert wurden, sind gespeicherte Referenzlichtquellen in der Speichereinrichtung des autonom fahrenden Fahrzeugs abgelegt. Die Eigenschaften dieser gespeicherten Referenzlichtquellen entsprechen den Eigenschaften der physikalisch vorhandenen Lichtquellen. Die Lichtquellen, die zur Positionsbestimmung verwendet werden, können auch zu Beleuchtung des Gebäudes verwendet werden, müssen dies aber nicht.

In einer Weiterbildung gibt die Frequenz an, wie schnell die gespeicherte Referenzlichtquelle aus- und eingeschaltet oder in ihrer Helligkeit von einem oberen Schwellwert hin zu einem unteren Schwellwert und zurück geändert wird. Der obere Schwellwert kann beispielsweise die maximale Helligkeit sein. Der untere Schwellwert kann beispielsweise eine minimale Helligkeit sein, die noch detektierbar ist, wobei noch Licht ausgesendet wird. Diese Eigenschaft gilt dann auch für die in dem Gebäude physikalisch installierte Lichtquelle. Der Einsatz einer neuromorphen Kamera ist hier besonders vorteilhaft, weil diese auch sehr hohe Frequenzen, mit denen die Lichtquelle betrieben wird, erfassen kann.

In einer Weiterbildung ist die Positionsbestimmungsvorrichtung dazu ausgebildet, um eine detektierte Lichtquelle für die Ermittlung der Position des autonom fahrenden Fahrzeugs unberücksichtigt zu lassen, falls die ermittelte Eigenschaft der detektierten Lichtquelle zu keiner der in der Speichereinrichtung gespeicherten Eigenschaften der gespeicherten Referenzlichtquellen korrespondiert. Dadurch wird eine fehlerhafte Positionsbestimmung vermieden. Gleichzeitig kann die Beleuchtung des Gebäudes beliebig angepasst werden und zwar ohne, dass sich die geänderte Beleuchtung auf die Qualität der Ermittlung der Position negativ auswirkt.

In einer Weiterbildung ist die Positionsbestimmungsvorrichtung dazu ausgebildet, um eine Eigenschaft der detektierten Lichtquellen in Form:
a) einer Frequenz und/oder eines Pulsmusters zu ermitteln, mit welcher die detektierte Lichtquelle moduliert wird; und/oder
b) einer Wellenlänge, mit welcher die detektierte Lichtquelle Licht aussendet; und/oder
c) einer Helligkeit, mit welcher die detektierte Lichtquelle leuchtet,
zu ermitteln.

Dabei ist es besonders vorteilhaft, dass zumindest eine neuromorphe Kamera verwendet wird, weil diese auch sehr hohe Frequenzen, mit denen die Lichtquelle betrieben wird, erfassen kann.

In einer Weiterbildung ist die Positionsbestimmungsvorrichtung dazu ausgebildet, um lediglich diejenigen der detektierten Lichtquellen zur Ermittlung der Position des autonom fahrenden Fahrzeugs zu verwenden, die mit einer Frequenz moduliert werden, die oberhalb eines Schwellwerts liegt. Dadurch werden einerseits Benutzer nicht gestört und andererseits kann ist eine eindeutige Detektion mittels der zumindest einen neuromorphen Kamera möglich.

Vorzugsweise liegt der Schwellwert über 60Hz, 80 Hz, 100 Hz, 120 Hz, 140 Hz, 160 Hz, 180 Hz, 200 Hz, 220 Hz, 240 Hz, 260 Hz, 280 Hz, 300 Hz oder oberhalb von 300 Hz. Die Modulation der Lichtquellen in dem Gebäude mit derartigen Frequenzen wird durch einen Benutzer nicht wargenommen.

Vorzugsweise liegt ein zweiter Schwellwert unterhalb von von 500 Hz. In diesem Fall werden die Lichtquellen in dem Gebäude nicht mit einer Frequenz aus- und eingeschaltet, die über 500 Hz liegt.

In einer Weiterbildung ist die zumindest eine neuromorphe Kamera dazu ausgebildet ist, um lediglich dann einen Datenstrom an die Verarbeitungsvorrichtung auszugeben, wenn sich die Helligkeit zumindest eines Pixels oder einer Gruppe von Pixeln geändert hat.

In einer Weiterbildung ist die zumindest eine neuromorphe Kamera dazu ausgebildet, um lediglich dann einen Datenstrom an die Verarbeitungsvorrichtung auszugeben, wenn sich die Helligkeit zumindest eines Pixels oder einer Gruppe von Pixeln stärker als ein vorgegebener Schwellwert geändert hat. Dadurch wird vermieden, dass geringfügige Helligkeitsänderungen bereits zu einem Auslösen führen.

In einer Weiterbildung ist die zumindest eine neuromorphe Kamera derart an dem autonom fahrenden Fahrzeug angeordnet, dass das Sichtfeld überwiegend oder vollständig:
a) nach oben, in Richtung der Decke; und/oder
b) in Richtung der Wand; und/oder
c) nach unten, in Richtung des Bodens;
gerichtet ist. Dies erlaubt, dass die Lichtquellen, die zur Ermittlung der Position verwendet werden, in üblicher Art und Weise in das Gebäude installiert werden können.

In einer Weiterbildung umfasst die zumindest eine neuromorphe Kamera ein optisches Filter, welches dazu ausgebildet ist, um lediglich Licht einer bestimmten Wellenlänge durchzulassen. Dadurch wird erreicht, dass lediglich Lichtquellen, die mit der hierzu korrespondierenden Wellenlänge betrieben werden, durch die neuromorphe Kamera detektierbar sind. Dadurch werden etwaige Störungen (Fremdereignisse) durch andere Lichtquellen reduziert.

Der erfindungsgemäße Verbund umfasst ein autonom fahrendes Fahrzeug, welches gemäß den vorherigen Ausführungen aufgebaut ist, und eine Vielzahl von Lichtquellen. Die Vielzahl der Lichtquellen sind an unterschiedlichen Stellen in dem Gebäude im Sichtfeld des autonom fahrenden Fahrzeugs angeordnet. Einige oder alle der Lichtquellen weisen zumindest eine unterschiedliche Eigenschaft auf, durch welche die entsprechende Lichtquelle von den anderen Lichtquellen optisch unterschieden werden kann. Die Positionsbestimmungsvorrichtung ist dazu ausgebildet, um die Lichtquellen zu detektieren und die Eigenschaften der detektierten Lichtquellen zu ermitteln und um diese Eigenschaften mit in der Speichereinrichtung gespeicherten Eigenschaften der gespeicherten Referenzlichtquellen abzugleichen. Die Positionsbestimmungsvorrichtung ist dann dazu ausgebildet, um zu ermitteln, zu welcher gespeicherten Referenzlichtquelle die jeweils detektierte Lichtquelle korrespondiert, um dadurch die Position des autonom fahrenden Fahrzeugs im Gebäude zu ermitteln.

In einer Weiterbildung weisen die Lichtquellen jeweils eine Kommunikationseinrichtung auf, die dazu ausgebildet ist, um ein Konfigurationssignal von einem tragbaren Endgerät, insbesondere drahtlos, zu empfangen und um in Abhängigkeit des Konfigurationssignals Licht mit einer bestimmten:
a) Frequenz und/oder Pulsmuster; und/oder
b) Wellenlänge; und/oder
c) Helligkeit;
auszusenden. Es ist besonders vorteilhaft, dass die installierten Lichtquellen sehr einfach konfiguriert werden können. So können die individuellen Eigenschaften den Lichtquellen separat zugewiesen werden. Auch eine nachträgliche Änderung ist möglich.

In einer Weiterbildung ist die Positionsbestimmungsvorrichtung dazu ausgebildet, um fortlaufend die Position des autonom fahrenden Fahrzeugs zu ermitteln. Das autonom fahrende Fahrzeug ist anhand der fortlaufend ermittelten Position und einer in der Speichereinrichtung gespeicherten Referenzkarte dazu ausgebildet, um selbständig durch das Gebäude zu fahren.

In einer Weiterbildung sind die Lichtquellen, die in dem Gebäude installiert sind dazu ausgebildet, um für das menschliche Auge sichtbares oder unsichtbares Licht zu erzeugen.

In einer Weiterbildung weisen einige aber insbesondere nicht alle Lichtquellen eine Eigenschaft auf, durch die sie sich von anderen Lichtquellen unterscheiden. So kann es im Sichtfeld der neuromorphen Kamera Lichtquellen geben, die lediglich zur Beleuchtung dienen und frei von individuellen (optischen) Eigenschaften sind und andere Lichtquellen, die über individuelle (optische) Eigenschaften (Frequenz, Pulsmuster, Helligkeit, Wellenlänge) verfügen.

In einer Weiterbildung sind die Lichtquellen dazu ausgebildet, um ultraviolettes Licht zu emittieren, wobei Wellenlängen von weniger als 400 Nanometern (nm) verwendet werden. Alternativ dazu kann blaues Licht emittiert werden, wobei die Wellenlänge zwischen etwa 450 nm und 495 nm liegt. Alternativ dazu kann grünes Licht emittiert werden, wobei die Wellenlänge zwischen 495 nm und 570 nm liegt. Alternativ dazu kann gelbes Licht emittiert werden, wobei die Wellenlänge zwischen 570 nm bis 590 nm liegt. Alternativ dazu kann rotes Licht emittiert werden, wobei die Wellenlänge zwischen 620 nm bis 750 nm liegt. Alternativ dazu kann Infrarotlicht emittiert werden, wobei die Wellenlänge zwischen 750 nm bis hin zu mehreren Mikrometern liegt. Selbstverständlich kann auch eine Kombination verschiedener Farben verwendet werden, damit die Lichtquellen beispielsweise wei-βes Licht emittieren.

In einer Weiterbildung sind zwei Lichtquellen, die zur selben Zeit in dem Sichtfeld des autonom fahrenden Fahrzeugs angeordnet sind, dazu ausgebildet, um mit einer unterschiedlichen Frequenz und/oder einem unterschiedlichen Pulsmuster und/oder einer unterschiedlichen Helligkeit und/oder einer unterschiedlichen Farbe und damit Wellenlänge betrieben zu werden.

In einer Weiterbildung handelt es sich bei den Lichtquellen um LEDs. Diese können besonders einfach mit einer hohen Frequenz betrieben werden.

In einer Weiterbildung umfasst der Verbund noch die übergeordnete Leiteinrichtung. Die übergeordnete Leiteinrichtung ist dazu ausgebildet, um die Lichtquellen zu aktivieren oder zu deaktivieren. Vorzugsweise ist übergeordnete Leiteinrichtung dazu ausgebildet, um die Lichtquellen zu deaktivieren, wenn sich kein autonom fahrendes Fahrzeug in dem entsprechenden Teil des Gebäudes aufhält. Weiter vorzugsweise ist die übergeordnete Leiteinrichtung dazu ausgebildet, um die Lichtquellen zu deaktivieren, wenn sich eine Person in dem entsprechenden Teil des Gebäudes befindet.

Das erfindungsgemäße Verfahren dient zum Betrieb des autonom fahrenden Fahrzeugs, welches gemäß den vorherigen Ausführungen aufgebaut ist. In einem ersten Verfahrensschritt werden eine Vielzahl von Lichtquellen mittels der zumindest einen neuromorphen Kamera detektiert. In einem zweiten Verfahrensschritt findet ein Abgleichen der Vielzahl der detektierten Lichtquellen mit in der Speichereinrichtung gespeicherten Referenzlichtquellen statt. In einem Dritten Verfahrensschritt erfolgt ein Ermitteln der Position des autonom fahrenden Fahrzeugs.

Nachfolgend wird die Erfindung rein beispielhaft unter Bezugnahme auf die Zeichnungen beschrieben. Es zeigen:
- Figur 1:: ein Ausführungsbeispiel eines erfindungsgemäßen Verbunds aus einem autonom fahrenden Fahrzeug und eine Vielzahl von Lichtquellen;
- Figur 2:: ein Ausführungsbeispiel, welches erläutert wie eine Eigenschaft einer Lichtquelle aussehen kann;
- Figur 3:: ein Ausführungsbeispiel, welches den Vorteil unterschiedlicher Eigenschaften von Lichtquellen im Sichtfeld zumindest einer neuromorphen Kamera des autonom fahrenden Fahrzeugs beschreibt;
- Figur 4:: ein Ausführungsbeispiel, welches einen Aufbau des erfindungsgemä-ßen autonom fahrenden Fahrzeugs beschreibt; und
- Figur 5:: ein Flussdiagramm, welches ein Verfahren zum Betrieb des erfindungsgemäßen autonom fahrenden Fahrzeugs erläutert.

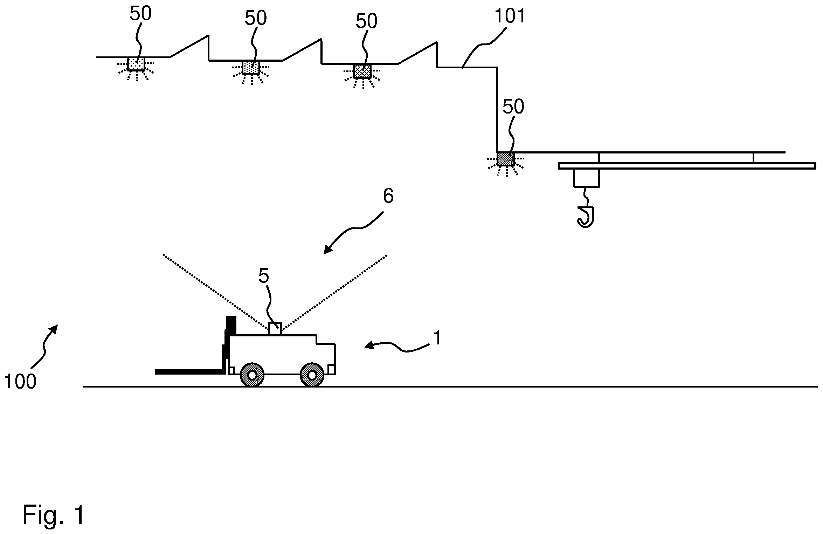

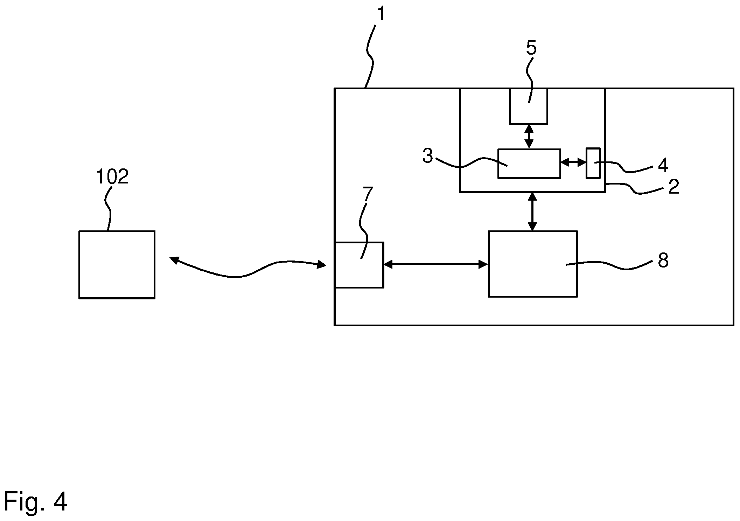

Figur 1 zeigt ein Ausführungsbeispiel eines erfindungsgemäßen Verbunds 100 aus einem autonom fahrenden Fahrzeug 1 und einer Vielzahl von Lichtquellen 50. Das autonom fahrende Fahrzeug 1 ist in Form eines Gabelstaplers zum Transport von Paletten oder Gitterboxen ausgebildet. In Figur 4 ist ein detaillierterer Aufbau des erfindungsgemäßen autonom fahrenden Fahrzeugs 1 dargestellt.

Das autonom fahrende Fahrzeug 1 umfasst eine Positionsbestimmungsvorrichtung 2 zur Bestimmung der Position des autonom fahrenden Fahrzeugs 1 innerhalb des Gebäudes 101. die Positionsbestimmungsvorrichtung 2 umfasst eine Verarbeitungsvorrichtung 3, eine Speichereinrichtung 4 und zumindest eine neuromorphe Kamera 5. Die zumindest eine neuromorphe Kamera 5 ist dazu ausgebildet ist, um eine Vielzahl von den Lichtquellen 50 in ihrem Sichtfeld 6 in der Umgebung des autonom fahrenden Fahrzeugs 1 zu detektieren. Die Verarbeitungsvorrichtung 3 ist dazu ausgebildet, um die Vielzahl der detektierten Lichtquellen 50 mit in der Speichereinrichtung 4 gespeicherten Referenzlichtquellen abzugleichen, um dadurch die Position des autonom fahrenden Fahrzeugs 1 zu ermitteln.

Das Sichtfeld 6 der neuromorphen Kamera 5 ist in diesem Ausführungsbeispiel in Richtung einer Decke des Gebäudes 101 gerichtet.

Das autonom fahrende Fahrzeug 1 umfasst vorzugsweise noch eine Kommunikationseinrichtung 7, wobei das autonom fahrende Fahrzeug 1 dazu ausgebildet ist, um die ermittelte Position über die Kommunikationseinrichtung 7 an eine übergeordnete Leiteinrichtung 102 zu übertragen. Die Positionsbestimmungsvorrichtung 2 ist dazu ausgebildet, direkt mit der Kommunikationseinrichtung 7 zu kommunizieren oder, wie in Figur 4 dargestellt, über eine Steuereinrichtung 8. Die Steuereinrichtung 8 ist vorzugsweise dazu ausgebildet, um das autonom fahrende Fahrzeug 1 zu steuern. Die Verarbeitungsvorrichtung 3 und die Steuereinrichtung 8 können beispielsweise auf derselben Leiterplatte und mit demselben Computerchip realisiert sein. Grundsätzlich können die Verarbeitungsvorrichtung 3 und die Steuereinrichtung 8 auch durch unterschiedliche Baugruppen gebildet sein. Für den Fall, dass die Speichereinrichtung 4 über die Steuereinrichtung 8 angesteuert wird, gilt dennoch, dass die Positionsbestimmungsvorrichtung 2 eben jene Speichereinrichtung 4 umfasst, da die Verarbeitungsvorrichtung 3 der Positionsbestimmungsvorrichtung 2 auf diese Speichereinrichtung 4, wenn auch indirekt über die Steuereinrichtung 8, zugreift.

Die Positionsbestimmungsvorrichtung 2 ist dazu ausgebildet, um Eigenschaften der detektierten Lichtquellen 50 zu ermitteln und um diese Eigenschaften mit in der Speichereinrichtung 4 gespeicherten Eigenschaften der gespeicherten Referenzlichtquellen abzugleichen, um dadurch zu ermitteln, zu welcher gespeicherten Referenzlichtquelle die detektierte Lichtquelle 50 korrespondiert. In Figur 1 sind die Lichtquellen 50 mit einer unterschiedlichen Schraffur gefüllt, um darzustellen, dass die Lichtquellen 50 unterschiedliche Eigenschaften haben. Bei diesen Eigenschaften handelt es sich um optische Eigenschaften, die durch die neuromorphe Kamera 5 des autonom fahrenden Fahrzeugs 1 detektiert werden können. So kann die Positionsbestimmungsvorrichtung 2 diese optischen Eigenschaften der verschiedenen Lichtquellen 50 voneinander unterscheiden. Dadurch kann die Positionsbestimmungsvorrichtung 2 eindeutig feststellen, welche detektierte Lichtquelle 50 zu welcher gespeicherten Referenzlichtquelle korrespondiert, um in Abhängigkeit der bekannten Information über die Position der gespeicherten Referenzlichtquelle die eigene Position des autonom fahrenden Fahrzeugs 1 zu ermitteln.

Vorzugsweise befinden sich in dem Sichtfeld 6 des autonom fahrenden Fahrzeugs 1 stets mehr als zwei, drei, vier, fünf oder mehr als fünf Lichtquellen 50. Vorzugsweise werden zur Positionsbestimmung des autonom fahrenden Fahrzeugs 1 separate Lichtquellen 50 in das Gebäude 101 installiert. Diese Lichtquellen 50 dienen primär der Positionsbestimmung und nicht der Ausleuchtung des Gebäudeinneren. Grundsätzlich könnte allerdings auch die normale Beleuchtung für das Gebäudeinnere durch Einprägen entsprechender optischer Eigenschaften dahingehend geändert werden, dass das autonom fahrende Fahrzeug 1 diese zur Positionsbestimmung verwenden kann.

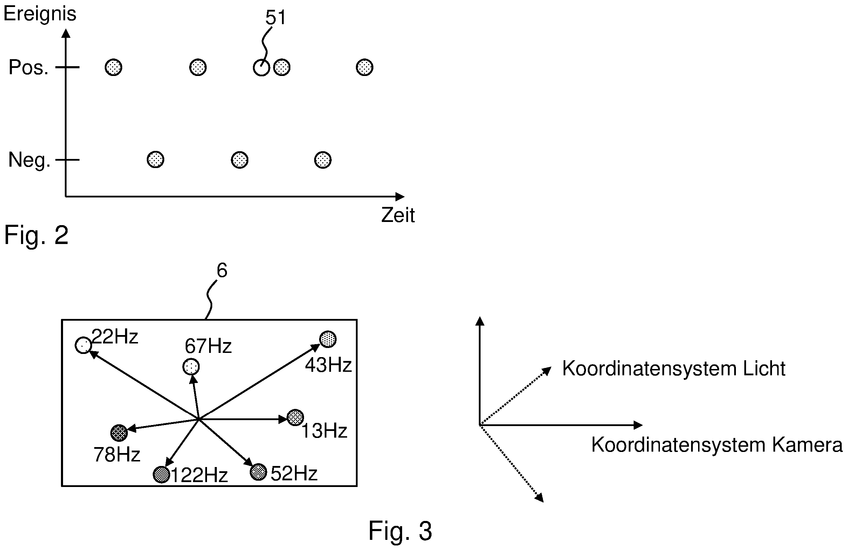

In Figur 2 ist ein Ausführungsbeispiel gezeigt, welches erläutert wie eine solche Eigenschaft der Lichtquelle 50 aussehen kann. Bei der Eigenschaft der Lichtquelle 50 kann es sich z.B. um eine Frequenz handeln, mit der die Lichtquelle 50 moduliert, beispielsweise ein- und ausgeschaltet wird. In diesem Fall gibt es positive Ereignisse und negative Ereignisse. Die positiven Ereignisse geben an, dass die Lichtquelle 50 eingeschaltet wurde, also eine Änderung der Helligkeit von aus zu ein erkannt wurde. Die negativen Ereignisse geben an, dass die Lichtquelle 50 ausgeschaltet wurde, als eine Änderung der Helligkeit von ein zu Haus erkannt wurde. Dies erfolgt in diesem Fall mit einer konstanten Periode. Diese Ereignisse sind mit Kreisen dargestellt, die schraffiert sind. Die Positionsbestimmungsvorrichtung 2 ist dazu ausgebildet, um diese Eigenschaften der Lichtquelle 50 zu detektieren. Hierzu kann die Positionsbestimmungsvorrichtung 2 dazu ausgebildet sein, um mehrere Perioden zu analysieren, um hieraus die Frequenz zu berechnen, mit welcher die Lichtquelle 50 moduliert wird. Ein Fremdereignis 51, wie dieses in Figur 2 durch einen Kreis mit einer weißen Füllung dargestellt ist, wird in diesem Fall ignoriert, weil das zeitliche Auftreten dieses Fremdereignisses 51 nicht zu der Periode passt. Ein solches Fremdereignis 51 kann beispielsweise das Einschalten einer anderen Lichtquelle, die beispielsweise zur normalen Beleuchtung dient, sein.

Figur 3 zeigt ein Ausführungsbeispiel, welches den Vorteil unterschiedlicher Eigenschaften von Lichtquellen 50 im Sichtfeld 6 der zumindest einen neuromorphen Kamera 5 des autonom fahrenden Fahrzeugs 1 beschreibt. Dargestellt ist, dass die neuromorphe Kamera 5 sieben Lichtquellen 50 in ihrem Sichtfeld 6 detektiert hat. Diese Lichtquellen 50 tauchen an unterschiedlichen Stellen, also an unterschiedlichen Pixeln der neuromorphen Kamera 5 auf. Dargestellt ist ebenfalls, dass diese Lichtquellen 50 unterschiedliche Eigenschaften haben. So sind alle dieser Lichtquellen 50 in ihre Frequenz unterschiedlich moduliert. Die Lichtquellen 50 arbeiten mit 13 Hz, 22 Hz, 43 Hz, 52 Hz, 67 Hz, 78 Hz und 122 Hz. Dadurch können diese voneinander unterschieden werden.

Weiterhin ist in Figur 3 dargestellt, dass das Koordinatensystem der Lichtquellen 50 von dem Koordinatensystem der neuromorphen Kamera 5 abweichen kann. Dieser Unterschied kann so Positionsbestimmung ermittelt werden. So kann der Unterschied beispielsweise durch einen Winkel beschrieben werden. Möchte das autonom fahrende Fahrzeug 1 nun weiterfahren, so kann es aufgrund der Orientierung den weiteren Weg genau berechnen. Insbesondere ist die Verarbeitungsvorrichtung dazu ausgebildet, um die Position des autonom fahrenden Fahrzeugs 1 dadurch zu bestimmen, dass eine Orientierung des Koordinatensystems der detektierten Lichtquellen 50 im Vergleich zum Koordinatensystem der neuromorphen Kamera 5 ermittelt wird.

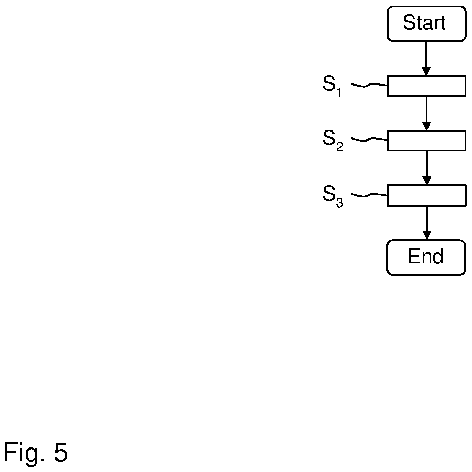

Figur 5 zeigt ein Flussdiagramm, welches ein Verfahren zum Betrieb des autonom fahrenden Fahrzeugs 1 erläutert. In einem ersten Verfahrensschritt S₁ erfolgt ein Detektieren einer Vielzahl von Lichtquellen 50 mittels der zumindest einen neuromorphen Kamera 5. In einem zweiten Verfahrensschritt S₂ erfolgt ein Abgleichen der Vielzahl der detektierten Lichtquellen 50 mit in der Speichereinrichtung 4 gespeicherten Referenzlichtquellen. In einem dritten Verfahrensschritt S₃ erfolgt ein Ermitteln der Position des autonom fahrenden Fahrzeugs 1.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar, sofern nicht explizit anders angegeben.

**Bezugszeichenliste**

| | |
|---|---|
| Autonom fahrendes Fahrzeug | 1 |
| Positionsbestimmungsvorrichtung | 2 |
| Verarbeitungsvorrichtung | 3 |
| Speichereinrichtung | 4 |
| neuromorphe Kamera | 5 |
| Sichtfeld | 6 |
| Kommunikationseinrichtung | 7 |
| Steuereinrichtung | 8 |
| Lichtquellen | 50 |
| Fremdereignis | 51 |
| Verbund | 100 |
| Gebäude | 101 |
| Übergeordnete Leiteinrichtung | 102 |
| Verfahrensschritte | S₁, S₂, S₃ |

## Patentansprüche

1. Autonom fahrendes Fahrzeug (1) zum Transport von Gütern und/oder Personen, wobei das autonom fahrende Fahrzeug (1) eine Positionsbestimmungsvorrichtung (2) zur Bestimmung der Position des autonom fahrenden Fahrzeugs (1) aufweist, wobei die Positionsbestimmungsvorrichtung (2) eine Verarbeitungsvorrichtung (3), eine Speichereinrichtung (4) und zumindest eine neuromorphe Kamera (5) umfasst, wobei die zumindest eine neuromorphe Kamera (5) dazu ausgebildet ist, um eine Vielzahl von Lichtquellen (50) in ihrem Sichtfeld (6) in der Umgebung des autonom fahrenden Fahrzeugs (1) zu detektieren, wobei die Verarbeitungsvorrichtung (3) dazu ausgebildet ist, um die Vielzahl der detektierten Lichtquellen (50) mit in der Speichereinrichtung (4) gespeicherten Referenzlichtquellen abzugleichen, um dadurch die Position des autonom fahrenden Fahrzeugs (1) zu ermitteln.

2. Autonom fahrendes Fahrzeug (1) nach Anspruch 1,
**dadurch gekennzeichnet, dass**
die Speichereinrichtung (4) eine Referenzkarte aufweist, in welcher die Referenzlichtquellen enthalten sind, wobei die Verarbeitungsvorrichtung (3) dazu ausgebildet ist, um anhand des Abgleichs der detektierten Lichtquellen (50) mit den Referenzlichtquellen die Position des autonom fahrenden Fahrzeugs (1) auf der Referenzkarte zu ermitteln.

3. Autonom fahrendes Fahrzeug (1) nach Anspruch 1 oder 2,
**dadurch gekennzeichnet, dass**
das autonom fahrende Fahrzeug (1) eine Kommunikationseinrichtung (7) aufweist, wobei das autonom fahrende Fahrzeug (1) dazu ausgebildet ist, um die ermittelte Position über die Kommunikationseinrichtung (7) an eine übergeordnete Leiteinrichtung (102) zu übertragen.

4. Autonom fahrendes Fahrzeug (1) nach einem der vorstehenden Ansprüche,
**dadurch gekennzeichnet, dass**
die Verarbeitungsvorrichtung (3) dazu ausgebildet ist, um festzustellen, welche detektierte Lichtquelle (50) welcher gespeicherten Referenzlichtquelle entspricht, um anhand dieses Abgleichs die Position des autonom fahrenden Fahrzeugs (1) zu ermitteln.

5. Autonom fahrendes Fahrzeug (1) nach einem der vorstehenden Ansprüche,
**dadurch gekennzeichnet, dass**
die Positionsbestimmungsvorrichtung (2) dazu ausgebildet ist, um Eigenschaften der detektierten Lichtquellen (50) zu ermitteln und um diese Eigenschaften mit in der Speichereinrichtung (4) gespeicherten Eigenschaften der gespeicherten Referenzlichtquellen abzugleichen, um dadurch zu ermitteln, zu welcher gespeicherten Referenzlichtquelle die detektierte Lichtquelle (50) korrespondiert.

6. Autonom fahrendes Fahrzeug (1) nach Anspruch 5,
**dadurch gekennzeichnet, dass**
jede gespeicherte Referenzlichtquelle zumindest eine gespeicherte Eigenschaft umfasst und dass sich die zumindest eine gespeicherte Eigenschaft der meisten oder aller gespeicherten Referenzlichtquellen voneinander in ihrer Art und/oder ihrem Wert unterscheiden.

7. Autonom fahrendes Fahrzeug (1) nach Anspruch 5 oder 6,
**dadurch gekennzeichnet, dass**
es sich bei der zumindest einen gespeicherten Eigenschaft von zumindest einer gespeicherten Referenzlichtquelle um:
a) eine Frequenz und/oder ein Pulsmuster handelt, die der gespeicherten Referenzlichtquelle zugewiesen ist; und/oder
b) eine Wellenlänge handelt, die der gespeicherten Referenzlichtquelle zugewiesen ist; und/oder
c) einer Helligkeit handelt, die der gespeicherten Referenzlichtquelle zugewiesen ist.

8. Autonom fahrendes Fahrzeug (1) nach einem der Ansprüche 5 bis 7,
**dadurch gekennzeichnet, dass**
die Positionsbestimmungsvorrichtung (2) dazu ausgebildet ist, um eine detektierte Lichtquelle (50) für die Ermittlung der Position des autonom fahrenden Fahrzeugs (1) unberücksichtigt zu lassen, falls die ermittelte Eigenschaft der detektierten Lichtquelle (50) zu keiner der in der Speichereinrichtung (4) gespeicherten Eigenschaften der gespeicherten Referenzlichtquellen korrespondiert.

9. Autonom fahrendes Fahrzeug (1) nach einem der vorstehenden Ansprüche, **dadurch gekennzeichnet, dass**
dass die Positionsbestimmungsvorrichtung (2) dazu ausgebildet ist, um eine Eigenschaft der detektierten Lichtquellen (50) in Form:
a) einer Frequenz und/oder eines Pulsmusters zu ermitteln, mit welcher die detektierte Lichtquelle (50) moduliert wird; und/oder
b) einer Wellenlänge, mit welcher die detektierte Lichtquelle (50) Licht aussendet; und/oder
c) einer Helligkeit, mit welcher die detektierte Lichtquelle (50) leuchtet,
zu ermitteln.

10. Autonom fahrendes Fahrzeug (1) nach einem der vorstehenden Ansprüche, **dadurch gekennzeichnet, dass**
dass die Positionsbestimmungsvorrichtung (2) dazu ausgebildet ist, um lediglich diejenigen der detektierten Lichtquellen (50) zur Ermittlung der Position des autonom fahrenden Fahrzeugs (1) zu verwenden, die mit einer Frequenz moduliert werden, die oberhalb eines Schwellwerts liegt.

11. Autonom fahrendes Fahrzeug (1) nach einem der vorstehenden Ansprüche, **dadurch gekennzeichnet, dass**
die zumindest eine neuromorphe Kamera (5) derart an dem autonom fahrenden Fahrzeug (1) angeordnet ist, dass das Sichtfeld (6) überwiegend oder vollständig:
a) nach oben, in Richtung der Decke; und/oder
b) in Richtung der Wand; und/oder
c) nach unten, in Richtung des Bodens;
gerichtet ist.

12. Autonom fahrendes Fahrzeug (1) nach einem der vorstehenden Ansprüche, **dadurch gekennzeichnet, dass**
die zumindest eine neuromorphe Kamera (5) ein optisches Filter umfasst, welches dazu ausgebildet ist, um lediglich Licht einer bestimmten Wellenlänge durchzulassen.

13. Verbund (100) aus einem autonom fahrenden Fahrzeug (1), welches gemäß einem der vorherigen Ansprüche aufgebaut ist und einer Vielzahl von Lichtquellen (50),
wobei die Vielzahl der Lichtquellen (50) an unterschiedlichen Stellen in einem Gebäude (101) im Sichtfeld des autonom fahrenden Fahrzeugs (1) angeordnet sind, wobei einige oder alle der Lichtquellen (50) zumindest eine unterschiedliche Eigenschaft aufweisen, durch welche die entsprechende Lichtquelle (50) von den anderen Lichtquellen (50) unterscheidbar ist, wobei die Positionsbestimmungsvorrichtung (2) dazu ausgebildet ist, um die Lichtquellen (50) zu detektieren und die Eigenschaften der detektierten Lichtquellen (50) zu ermitteln und um diese Eigenschaften mit in der Speichereinrichtung (4) gespeicherten Eigenschaften der gespeicherten Referenzlichtquellen abzugleichen, um dadurch zu ermitteln, zu welcher gespeicherten Referenzlichtquelle die jeweils detektierte Lichtquelle (50) korrespondiert, um dadurch die Position des autonom fahrenden Fahrzeugs (1) im Gebäude (101) zu ermitteln.

14. Verbund (100) nach Anspruch 13,
**dadurch gekennzeichnet, dass**
die Vielzahl von Lichtquellen (50) jeweils eine Kommunikationseinrichtung aufweisen, die dazu ausgebildet ist, um ein Konfigurationssignal von einem, insbesondere tragbaren, Endgerät zu empfangen und um in Abhängigkeit des Konfigurationssignals Licht mit einer bestimmten:
a) Frequenz und/oder Pulsmuster; und/oder
b) Wellenlänge; und/oder
c) Helligkeit;
auszusenden.

15. Verfahren zum Betrieb eines autonom fahrenden Fahrzeugs (1) nach einem der Ansprüche 1 bis 13, mit den folgenden Verfahrensschritten:
- Detektieren (S₁) einer Vielzahl von Lichtquellen (50) mittels der zumindest einen neuromorphen Kamera (5);
- Abgleichen (S₂) der Vielzahl der detektierten Lichtquellen (50) mit in der Speichereinrichtung (4) gespeicherten Referenzlichtquellen;
- Ermitteln (S₃) der Position des autonom fahrenden Fahrzeugs (1).
